# DEMANDE DE BREVET EUROPEEN

(11) **EP 4 745 080 A1**
(43) Date de publication de la demande: **20.05.2026**
(21) Numéro de dépôt: 25215703.7
(22) Date de dépôt: 13.11.2025
(51) Int. Cl.: B67D 1/08, B67D 7/02, F16L 37/23, F16L 37/34

(54) **DISPOSITIF DE REMPLISSAGE EN CARBURANT ET ENSEMBLE DE REMPLISSAGE DE RÉSERVOIR DE VÉHICULE EN CARBURANT**

(30) Priorité: 14.11.2024 FR 2412437
(71) Demandeur: Staubli Faverges, 74210 Faverges-Seythenex (FR)
(72) Inventeur: BAHNO, Igor, 73200 ALBERTVILLE (FR); DURIEUX, Christophe, 73200 GILLY SUR ISERE (FR)
(74) Mandataire: Lavoix

(57) **Abrégé**

La présente invention concerne un dispositif de remplissage (5) accouplé avec un about (580). Le dispositif comprend un porte-billes (15) et une bille de verrouillage (170) mobile entre des positions escamotée et de verrouillage. Une soupape (175) est mobile dans le porte-billes entre des positions arrière et avant. Une bague de verrouillage (330) est mobile entre une position de blocage qui maintient la bille de verrouillage en position de verrouillage, et une position de déblocage. Une bille d'attelage (400) est mobile entre une première position qui empêche la soupape d'atteindre sa position avant, et une seconde position. Un tiroir (405) est repoussé par l'about entre une position engagée qui maintient la bille de verrouillage en position escamotée, et une position dégagée, Un organe élastique (470) déplace le tiroir vers sa position engagée, et un organe élastique (485) déplace la bague de verrouillage vers sa position de blocage.

## Description

La présente invention concerne un dispositif de remplissage en carburant et ensemble de remplissage de réservoir de véhicule en carburant comprenant un tel dispositif de remplissage.

Les ensembles de connexion pour le remplissage de carburant liquide de véhicules de compétition, notamment des deux-roues, équipés d'about de remplissage apte à être à connectés à des dispositifs de remplissage.

Il est notamment connu de EP1526319 d'utiliser des éléments de remplissage femelle pourvus d'un organe de détection de l'about, par appui sur une partie fixe de l'about, qui commande le déplacement radial d'un crochet de verrouillage mobile entre une position de dégagement et une position de prise sur l'about. Le corps de l'élément femelle vient alors en butée sur l'about. Le crochet libère une bague de verrouillage qui, par son avancement par rapport au corps femelle, verrouille l'élément femelle avec l'about et entraine finalement l'ouverture des soupapes de carburant et d'évent de l'élément femelle, en repoussant une soupape d'about.

Les fonctions de verrouillage/déverrouillage et les fonctions d'ouverture/fermeture des soupapes sont réalisées dans un même mouvement, et positivement par l'opérateur, de sorte que les étapes liées au verrouillage et les étapes de remplissage ne sont pas différentiables. La non-différentiation des étapes de remplissage et de verrouillage pourrait entrainer l'activation du remplissage alors que le dispositif est mal verrouillé ce qui pourrait entrainer des fuites.

D'autre part l'actionnement du verrouillage avec l'ouverture des soupapes est réalisé par manipulation des poignées à galets ce qui peut paraitre fastidieux.

Le but de l'invention est alors de proposer un dispositif de remplissage en carburant permettant d'améliorer la fonction de verrouillage, et d'apporter des fonctions de sécurité configurables pour le remplissage de véhicule en carburant tout assurant la sécurité de l'opérateur.

A cet effet, l'invention a pour objet un dispositif de remplissage en carburant configuré pour être accouplé avec un about raccordé à un réservoir de véhicule, le dispositif de remplissage comprenant :
- un porte-billes, comprenant :
   ∘ un corps de porte-billes, tubulaire, s'étendant le long d'un axe principal entre une partie arrière et une partie avant du corps de porte-billes, la partie avant définissant une embouchure de réception de l'about,
   ∘ un siège de soupape, tubulaire, s'étendant dans l'embouchure de réception du corps de porte-billes le long de l'axe principal,
- au moins une bille de verrouillage (170), reçue dans un premier logement radial ménagé dans la partie avant du corps de porte-billes, et mobile dans le premier logement radial entre une position escamotée et une position de verrouillage dans laquelle :
   ∘ ladite au moins une bille de verrouillage est radialement moins excentrée par rapport à l'axe principal que dans la position escamotée, et
   ∘ ladite au moins une bille de verrouillage dépasse dans l'embouchure de réception,
- une soupape, comprenant :
   ∘ un corps de soupape, qui est tubulaire et qui s'étend le long de l'axe principal entre une extrémité avant du corps de soupape, et une extrémité arrière du corps de soupape, le corps de soupape définissant une surface radiale externe de soupape et formant un canal d'écoulement apte à être relié fluidiquement à une canalisation de remplissage arrière de la soupape,
   ∘ un passage de distribution, relié au canal d'écoulement et ménagé radialement à l'axe principal à l'avant du corps de soupape, et
   la soupape étant montée dans le porte-billes de sorte que :
   ∘ la surface radiale externe de soupape est en contact avec une surface intérieure du corps de porte-billes,
   ∘ la soupape est mobile en translation le long de l'axe principal par rapport au porte-billes entre une position arrière, dans laquelle le siège de soupape obture le passage de distribution, et une position avant, dans laquelle le passage de distribution de la soupape est dégagé,
- une bague de verrouillage, tubulaire, entourant le porte-billes et étant mobile entre :
   ∘ une position de blocage, dans laquelle la bague de verrouillage est apte à maintenir ladite au moins une bille de verrouillage dans la position de verrouillage, et
   ∘ une position de déblocage dans laquelle ladite au moins une bille de verrouillage est libre d'atteindre la position escamotée,
- au moins une bille d'attelage, solidaire axialement du porte-billes et mobile radialement à l'axe principal entre :
   ∘ une première position, dans laquelle ladite au moins une bille d'attelage empêche la soupape d'atteindre sa position avant, ladite au moins une bille d'attelage étant maintenue dans la première position lorsque la bague de verrouillage est dans la position de déblocage, et
   ∘ une seconde position, dans laquelle ladite au moins une bille d'attelage autorise le déplacement de la soupape vers sa position avant,
- un tiroir, mobile dans un espace annulaire défini entre une surface extérieure du siège de soupape et la surface intérieure de la partie avant du corps de porte-billes, le tiroir étant configuré pour être repoussé par l'about le long de l'axe principal entre :
   ∘ une position engagée dans laquelle le tiroir est apte à maintenir ladite au moins une bille de verrouillage en position escamotée, et
   ∘ une position dégagée dans laquelle ladite au moins une bille de verrouillage est libre d'atteindre sa position de verrouillage,
- un premier organe élastique apte à déplacer le tiroir de sa position dégagée vers sa position engagée, et
- un deuxième organe élastique apte à déplacer la bague de verrouillage de sa position de déblocage vers sa position de blocage.

Grâce à l'invention, notamment gâce à la bague de verrouillage, la phase de verrouillage du dispositif de remplissage est sécurisée. En effet, en cas de désalignement du dispositif de remplissage, ladite au moins une bille de verroouillage empêche l'avancée de la bague de verrouillage ce qui empêche l'ouverture de la soupape. Ainsi, les risques de fuite en cas de mauvaise connexion sont évités. De plus, la présence du deuxième organe élastique permet de verrouiller, sans nécessité d'effort extérieur, et de maintenir le dispositif verrouillé sur l'about. Ainsi, le verrouillage est sécurisé.

Suivant d'autres aspects avantageux de l'invention, le dispositif de remplissage en carburant comprend une ou plusieurs des caractéristiques suivantes, prises isolément ou suivant toutes les combinaisons techniquement possibles :
- le deuxième organe élastique prend appui sur le porte-billes ;
- dans la position engagée du tiroir ladite au moins une bille de verrouillage en position escamotée est apte à maintenir la bague de verrouillage dans la position de déblocage ;
- la surface radiale externe de soupape est configurée pour maintenir ladite au moins une bille d'attelage dans sa seconde position lorsque la soupape est en position avant ;
- le dispositif de remplissage comprend un troisième organe élastique apte à déplacer la soupape vers sa position arrière, et à maintenir la soupape en position arrière lorsque le tiroir passe de la position engagée à la position dégagée ;
- le dispositif de remplissage comprend une bague de manœuvre, montée autour de la bague de verrouillage et mobile en translation le long de l'axe principal, entre une position avancée et une position reculée entre lesquelles la bague de manœuvre peut entrainer la bague de verrouillage de sa position de blocage vers sa position de déblocage ;
- la surface radiale externe de soupape comprend au moins une rainure qui s'étend parallèlement à l'axe principal, ladite au moins une rainure étant apte à recevoir ladite au moins une bille d'attelage et autorisant, lorsque ladite au moins une bille d'attelage est dans sa première position, une translation de la soupape par rapport au porte-billes le long de l'axe principal sur une plage définie par une longueur longitudinale de ladite au moins une rainure ;
- le porte-billes comprend au moins un second logement radial aménagé à l'arrière du premier logement radial, ladite au moins une bille d'attelage étant apte à translater entre sa première et sa seconde position au travers dudit au moins un second logement radial et la bague de verrouillage comprend une gorge interne configurée pour recevoir ladite au moins une bille d'attelage dans sa seconde position de sorte que la dite au moins une bille d'attelage maintient la bague de verrouillage dans la position de blocage ;
- le dispositif de remplissage comprend des moyens de sécurité configurés pour prendre une première configuration et une deuxième configuration de sorte que, lorsque que les moyens de sécurité sont dans leur première configuration, les moyens de sécurité sont aptes à entrainer la bague de verrouillage de la position de blocage à la position de déblocage dans un mouvement de recul de la soupape entre une position intermédiaire, située par rapport au porte-billes entre la position avant et la position arrière, et la position arrière ;
- lorsque que les moyens de sécurité sont dans leur deuxième configuration, le déplacement de la bague de verrouillage de la position de blocage à la position de déblocage est indépendant du mouvement de recul de la soupape entre sa position avant et sa position arrière ;
- les moyens de sécurité comprennent une bille de sécurité mobile dans un logement oblong du porte-billes, dépassant radialement de chaque côté du logement oblong, et formant une butée axiale pour la soupape par rapport au porte-billes dans la position arrière de la soupape ;
- la bague de verrouillage comprend une gorge interne configurée pour recevoir la bille de sécurité, de sorte que la bague de verrouillage est entrainée de la position de blocage à la position de déblocage par la bille de sécurité en appui sur la soupape lors du mouvement de recul de la soupape, entre sa position avant et sa position arrière ;
- le dispositif de remplissage comprend des moyens de solidarisation, en rotation autour de l'axe principal, de la bague de manoeuvre avec la bague de verrouillage, les moyens de sécurité évoluant de leur première à leur deuxième configuration par un mouvement de rotation de la bague de manoeuvre par rapport au porte-billes ;
- le tiroir prend appui axialement sur le porte-billes dans sa position dégagée ;
- lorsque la soupape est en position avant, le siège de soupape et la soupape forment un espace annulaire fluidiquement relié à un canal d'évents ménagé à l'arrière du dispositif.

L'invention concerne également un ensemble de remplissage de réservoir de véhicule en carburant, l'ensemble comprenant un about, configuré pour être embarqué sur le véhicule et relié à un réservoir du véhicule, et un dispositif de remplissage tel que défini précédemment apte à être accouplé à l'about, l'about comprenant :
- un corps d'about configuré pour repousser le tiroir du dispositif de remplissage de sa position engagée vers sa position dégagée pendant un accouplement de l'about et du dispositif de remplissage, le corps d'about comprenant une gorge périphérique externe apte à recevoir ladite au moins une bille de verrouillage, lorsque ladite au moins une bille de verrouillage est en position de verrouillage, et
- un clapet mobile axialement dans le corps d'about entre une position avancée, dans laquelle le clapet prend appui sur un siège d'étanchéité du corps d'about, et une position de retrait, dans laquelle le clapet est éloigné du siège d'étanchéité.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en coupe d'un ensemble de remplissage, dans lequel un dispositif de remplissage dans une première configuration est désaccouplé d'un about ;
[Fig. 2] La figure 2 est une vue en perspective d'un porte-billes et d'une bague de verrouillage du dispositif de remplissage de la figure 1 ;
[Fig. 3] La figure 3 est une vue similaire à la figure 1, le dispositif de remplissage étant rapproché de l'about pour préparer un accouplement ;
[Fig. 4] La figure 4 est une vue similaire à la figure 1, le dispositif de remplissage étant dans une première étape de verrouillage ;
[Fig. 5] La figure 5 est une vue similaire à la figure 1, le dispositif de remplissage étant dans une deuxième étape de verrouillage ;
[Fig. 6] La figure 6 est une vue similaire à la figure 5, le dispositif de remplissage et l'about étant désaxés,
[Fig. 7] La figure 7 est une vue similaire à la figure 1, le dispositif de remplissage étant verrouillé à l'about ;
[Fig. 8] La figure 8 est vue similaire à la figure 1, le dispositif de remplissage étant dans une phase de remplissage ;
[Fig. 9] La figure 9 est une vue similaire à la figure 1, le dispositif de remplissage étant dans une phase de déverrouillage automatique ;
[Fig. 10] La figure 10 est une vue similaire à la figure 1, le dispositif de remplissage étant déverrouillé de l'about ;
[Fig. 11] La figure 11 est une vue similaire à la figure 9, le dispositif de remplissage étant dans une deuxième configuration ;
[Fig. 12] La figure 12 est une similaire à la figure 10, le dispositif de remplissage étant dans une deuxième configuration.

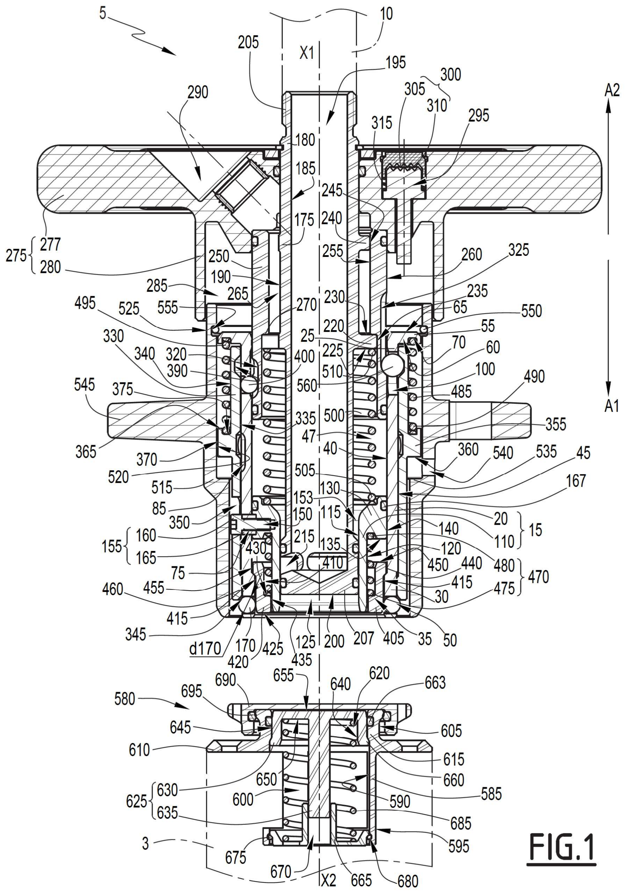

Un ensemble de remplissage en carburant 1 conforme à l'invention est représenté sur les figures 1 à 12. L'ensemble de remplissage en carburant 1 est configuré pour remplir en carburant un réservoir 3 de véhicule, non représenté.

L'ensemble de remplissage 1 est composé d'un dispositif de remplissage 5, dit élément femelle ou raccord femelle. Le dispositif de remplissage 5 est destiné à être fixé à une canalisation de remplissage 10.

Le dispositif de remplissage 5 comprend un porte-billes 15. Le porte-billes 15 comprend un corps de porte-billes 20. Le corps de porte-billes 20 est tubulaire et centré autour d'un axe principal X1. Le corps de porte-billes 20 s'étend le long de l'axe principal X1, entre une partie arrière 25 et une partie avant 30. La partie avant 30 définit une embouchure de réception 35.

Le corps de porte-billes 20 est délimité par une surface intérieure 40 et une surface radiale extérieure 45. La surface intérieure 40 est préférentiellement radiale à l'axe principal X1 et délimite un volume interne 47 du corps de porte-billes 20.

Pour la présente description, les termes tels que « axial », « radial » et « longitudinal » sont définis par rapport à l'axe principal X1. Dans ce cas, par exemple, une « surface axiale » s'étend perpendiculairement à l'axe principal X1, une « surface radiale » s'étend parallèlement à l'axe principal X1 et autour de l'axe principal X1. Les termes tels que « avant » et « distal », se rapportent à une direction avant A1 s'étendant de la partie arrière 25 en direction de la partie avant 30 parallèlement à l'axe principal X1. Les termes tels que « arrière » et « proximal », se rapportent à une direction arrière A2 opposée à la direction avant A1. Une « surface avant » est tournée dans la direction avant A1, une « surface arrière » est tournée dans la direction arrière A2. Les termes tels que « intérieur », « interne », « extérieur » et « externe » sont définis par rapport à l'axe principal X1. Dans ce cas, par exemple, « une surface interne » est orientée vers ou plus proche de l'axe principal X1 et « une surface externe » est orientée à l'opposé de l'axe principal X1 ou plus éloigné de l'axe principal X1.

Le corps de porte-billes 20 présente au moins un premier logement radial 50. Dans cet exemple, une vingtaine de premiers logements radiaux 50 sont ménagés dans la partie avant 30. Chacun des premiers logements radiaux 50 traverse radialement de part en part la partie avant 30 du corps de porte-billes 20. Les premiers logements radiaux 50 sont centrés et également répartis autour de l'axe principal X1.

La partie arrière 25 comprend une couronne 55. La couronne 55 s'étend radialement à l'axe principal X1 depuis la surface radiale extérieure 45 suivant une direction opposée à l'axe principal X1. La couronne 55 définit une surface axiale 60 tournée dans la direction avant A1 et une surface axiale 65 opposée à la surface axiale 60.

La couronne 55 présente une gorge axiale circulaire 70. La gorge axiale circulaire 70 est ménagée dans la surface axiale 60 et est centrée autour de l'axe principal X1.

Le corps de porte-billes 20 présente également quatre perçages 75. Chacun des perçages 75 traverse radialement de part en part le corps de porte-billes 20. Les perçages 75 sont centrés et également répartis autour de l'axe principal X1. Les perçages 75 sont ménagés entre les premiers logements radiaux 50 et la partie arrière 25 par rapport à l'axe principal X1.

La surface radiale extérieure 45 du corps de porte-billes 20 présente des paires rainures longitudinales 80 localisées entre les perçages 75 et la partie arrière 25. Dans cet exemple, cinq paires de rainures longitudinales 80 sont ménagées sur la surface radiale extérieure 45. Les paires de rainures longitudinales 80 s'étendent parallèlement à l'axe principal X1. Les paires de rainures longitudinales 80 sont centrées et également répartis autour de l'axe principal X1. Chacune des paires de rainures longitudinales 80 comprend une rainure longitudinale 85 et une seconde rainure longitudinale 90 distantes angulairement d'une dizaine de degrés autour de l'axe principal X1.

Avantageusement, le corps de porte-billes 20 comprend au moins un second logement radial 95 aménagé à l'arrière, selon la direction arrière A2, du premier logement radial 50. Plus précisément, l'au moins un second logement radial 95 est ménagé à l'arrière, selon la direction arrière A2, des paires de rainures longitudinales 80. Dans cet exemple, cinq seconds logements radiaux 95 sont ménagés sur le corps de porte-billes 20. Chacun des seconds logements radiaux 95 traverse radialement de part en part le corps de porte-billes 20. Les seconds logements radiaux 95 sont centrés et également répartis autour de l'axe principal X1.

Avantageusement, le corps de porte-billes 20 comprend au moins un logement oblong 100. Dans cet exemple, cinq logements oblongs 100 sont ménagés sur le corps de porte-billes 20. Chacun des logements oblongs 100 traverse radialement de part en part le corps de porte-billes 20 et s'étend parallèlement à l'axe principal X1. Les logements oblongs 100 sont centrés et également répartis autour de l'axe principal X1. Plus précisément, les logements oblongs 100 et des seconds logements radiaux 95 sont centrés et également répartis autour de l'axe principal X1 avec une alternance des logements oblongs 100 et des seconds logements radiaux 95.

Le porte-billes 15 comprend également un siège de soupape 110. Le siège de soupape 110 est tubulaire et centré autour de l'axe principal X1. Le siège de soupape 110 est délimité par une surface radiale interne 115 et une surface extérieure 120 qui est préférentiellement radiale à l'axe principal X1. La surface radiale interne 115 délimite un volume interne 125 du siège de soupape 110.

Le siège de soupape 110 comprend une collerette 130. La collerette 130 s'étend radialement à l'axe principal X1 depuis la surface extérieure 120 suivant une direction opposée à l'axe principal X1. La collerette 130 définit une surface axiale 135 tournée dans la direction avant A1 et une surface radiale externe 140.

La collerette 130 présente une gorge axiale circulaire 145. La gorge axiale circulaire 145 est ménagée dans la surface axiale 135 et est centrée autour de l'axe principal X1.

La première collerette 130 présente également, quatre perçages 150. Chacun des perçages 150 s'étend radialement de la surface radiale externe 140 vers l'axe principal X1. Les perçages 150 sont centrés et également répartis autour de l'axe principal X1.

Le sièges de soupape 110 est monté dans le volume interne 47 du corps de porte-billes 20, la surface radiale externe 140 étant en contact avec la surface intérieure 40 de sorte que le siège de soupape 110 s'étend dans l'embouchure de réception 35. L'embouchure de réception 35 et le siège de soupape 110 forment ainsi un espace annulaire 153 à l'avant du porte-billes 15 centré sur l'axe X1. L'espace annulaire 153 se rétrécit sur l'avant. Plus précisément, l'espace annulaire 153 est défini entre la surface intérieure 40 et la surface extérieure 120.

Le siège de soupape 110 est monté depuis la partie arrière 25 dans le volume interne 47 du corps de porte-billes 20 et déplacé suivant la direction avant A1 jusqu'à ce que les perçages 150 soient respectivement dans le prolongement des perçages 75.

Le siège de soupape 110 est solidarisé au corps de porte-billes 20 au moyen de quatre doigts de butée 155 respectivement constitués d'une vis 160 et d'une bague de serrage 165. Chacun des doigts de butée 155, est vissé dans un perçage 75 respectif et un perçage 150 respectif.

L'étanchéité du montage du siège de soupape 110 dans le corps de porte-billes 20 est assuré par un joint torique 167 positionné entre la surface intérieure 40 et la surface radiale externe 140.

Le dispositif de remplissage 5 comprend au moins une bille de verrouillage 170. Dans cet exemple, le dispositif de remplissage 5 comprend une vingtaine billes de verrouillage 170. Chacune des billes de verrouillage 170 est respectivement reçue dans un premier logement radial 50. Les billes de verrouillage 170 présentent un diamètre d170 supérieur à une épaisseur e20 du corps de porte-billes 20 et dépassent des logements radiaux 50.

Les billes de verrouillage 170 sont mobiles dans leur premier logement radial 50 respectif entre une position escamotée et une position de verrouillage. Dans leur position de verrouillage respective chacune des billes de verrouillage 170 est radialement moins excentrée par rapport à l'axe principal que dans sa position escamotée, et la bille de verrouillage 170 dépasse dans l'embouchure de réception 35.

Les premiers logements radiaux 50 disposent, respectivement, d'un fond de logement, non représenté, pour limiter la chute des billes de verrouillage 170 vers l'axe principal X1.

Dans la description qui suit le porte-billes 15 est considéré comme un élément fixe du dispositif de remplissage 5, les autres composants du dispositif de remplissage 5 étant mobile ou fixe par rapport au porte-billes 15.

Le dispositif de remplissage 5 comprend une soupape 175. La soupape 175 comprend un corps de soupape 180. Le corps de soupape 180 est tubulaire et centré autour de l'axe principal X1. Le corps de soupape 180 est délimité par une surface radiale interne 185 et une surface radiale externe 190. La surface radiale interne 185 délimite un canal d'écoulement 195.

Le corps de soupape 180 s'étend, parallèlement à l'axe principal X1, entre une extrémité avant 207 et une extrémité arrière 205. L'extrémité avant 207 comprend une face axiale avant 200 qui est plane et perpendiculaire à l'axe principal X1. La face axiale 200 s'étend radialement à l'axe X1 dans tout le volume interne 47 et bouche le canal d'écoulement 195 au niveau de l'extrémité avant 207.

L'extrémité arrière 205 est munie d'un filet destiné à être vissé à la canalisation de remplissage 10 arrière de la soupape 175, connecté à un système de stockage de carburant, non représenté.

La soupape 175 comprend, également, un passage de distribution 215. Le passage de distribution 215 est ménagé radialement à l'axe principal X1 à travers l'extrémité avant 207 du corps de soupape 180. Le canal d'écoulement 195 débouche dans le passage de distribution 215.

Le corps de soupape 180 comprend une collerette 220. La collerette 220 s'étend radialement à l'axe principal X1 depuis la surface radiale externe 190 suivant une direction opposée à l'axe principal X1. La collerette 220 définit une surface axiale 225 tournée dans la direction avant A1, une surface axiale 230 opposée à la surface axiale 225 et une surface radiale externe 235 reliant la surface axiale 225 à la surface axiale 230. La collerette 220 est ménagée sur le corps de soupape 180 entre le passage de distribution 215 et l'extrémité arrière 205 par rapport à l'axe principal X1.

Le corps de soupape 180 comprend une collerette 240. La collerette 240 s'étend radialement à l'axe principal X1 depuis la surface radiale externe 190 suivant une direction opposée à l'axe principal X1. La collerette 240 définit une surface radiale externe 245. La collerette 240 est ménagée sur le corps de soupape 180 entre la collerette 220 et l'extrémité arrière 205 par rapport à l'axe principal X1.

La soupape 175 comprend, également, un corps central 250. Le corps central 250 est tubulaire et centré autour de l'axe principal X1. Le corps central 250 est délimité par une surface radiale interne 255 et une surface radiale externe de soupape 260. La surface radiale interne 255 délimite un passage annulaire 265.

Le corps central 250 est monté par l'arrière sur le corps de soupape 180. La surface radiale interne 255 est en contact avec la surface radiale externe 235 et la surface radiale externe 245. Un épaulement 270 du corps central 250 est en butée avant avec la surface axiale 230 bloquant la translation du corps central 250 parallèlement à l'axe principal X1 dans la direction avant A1.

La soupape comprend une poignée 275 montée autour du corps de soupape 180 le long de l'axe principal X1. La poignée 275 dispose d'un volant 277 et d'une cloison annulaire périphérique 280 solidaire au volant 277 et qui s'étend depuis le volant 277 dans la direction avant A1. La cloison annulaire périphérique 280 forme, dans la direction avant A1, une chambre avant 285. Le corps central 250 est reçu au moins partiellement dans la chambre avant 285.

La poignée 275 comprend également un canal d'évent 290. Le canal d'évent 290 est ménagé dans le volant 277 et débouche dans le passage annulaire 265. Le canal d'évent 290 est incliné par rapport à l'axe principal X1.

Un logement 295 est ménagé dans le volant 277. Le logement 295 traverse de part en part, parallèlement à l'axe principal X1, le volant 277 et débouche dans la chambre avant 285.

La soupape 175 comprend un voyant 300 d'état de connexion du dispositif de remplissage 5. Le voyant 300 est constitué d'une lentille 305 et d'un piston 310. Le voyant 300 est logé dans le logement 295 et déborde dans la chambre avant 285. Le piston 310 est mobile, par rapport au logement 295, parallèlement à l'axe principal X1 entre une position avancée et une position reculée dans laquelle le piston 310 déborde moins dans la chambre avant 285 que dans la position avancée. Le voyant 300 est repoussé vers sa position avant par un premier ressort 315. La lentille 305 change en fonction de la position du piston 310.

Avantageusement, la surface radiale externe 260 de la soupape 175 comprend au moins une première rainure 320. Dans cet exemple, cinq rainures 320 sont ménagées sur la surface radiale externe 260. Chacune des rainures 320 s'étendent parallèlement à l'axe principal X1. Les rainures 320 sont centrées et également réparties autour de l'axe principal X1.

Avantageusement, la surface radiale externe 260 de la soupape 175 comprend au moins une deuxième rainure 325. Dans cet exemple, cinq rainures 325 sont ménagées sur la surface radiale externe 260. Chacune des rainures 325 s'étendent parallèlement à l'axe principal X1. Les rainures 325 sont centrées et également réparties autour de l'axe principal X1. Plus précisément, les rainures 325 et les rainures 320 sont centrées et également réparties autour de l'axe principal X1 avec une alternance des rainures 325 et rainures 320.

La soupape 175 est montée dans le porte-billes 15. Plus précisément, la soupape 175 est reçue dans le volume interne 47, la surface radiale externe 260 étant en contact avec la surface intérieure 40 et la surface radiale externe 190 étant en contact avec la première surface radiale interne 115.

La soupape 175 est mobile en translation parallèlement l'axe X1 par rapport au porte-billes 15 entre une position arrière et une position avant.

Lorsque la soupape 175 est en position arrière, le siège de soupape 110 obture le passage de distribution 215. En d'autre termes, l'extrémité avant 207 du corps de soupape 180 est reçu dans le volume interne 125 du siège de soupape 110 et la première surface radiale interne 115 bouche le passage de distribution 215.

Lorsque la soupape 175 est en position avant, le passage de distribution 215 est dégagé et le siège de soupape 110 et la surface radiale externe 190 du corps de soupape 180forment un espace annulaire fluidiquement relié au canal d'évents 290. Ainsi l'extrémité avant 207 du corps de soupape 180 est reçu sélectivement dans l'embouchure de réception 35 du porte-billes 15.

Le dispositif de remplissage 5 comprend une bague de verrouillage 330. La bague de verrouillage 330 est tubulaire et, centré autour de l'axe principal X1. Le bague de verrouillage est délimitée par une surface radiale interne 335 et une surface radiale externe 340.

La bague de verrouillage 330 comprend une embouchure conique 345 divergeant vers l'avant selon la direction avant A1.

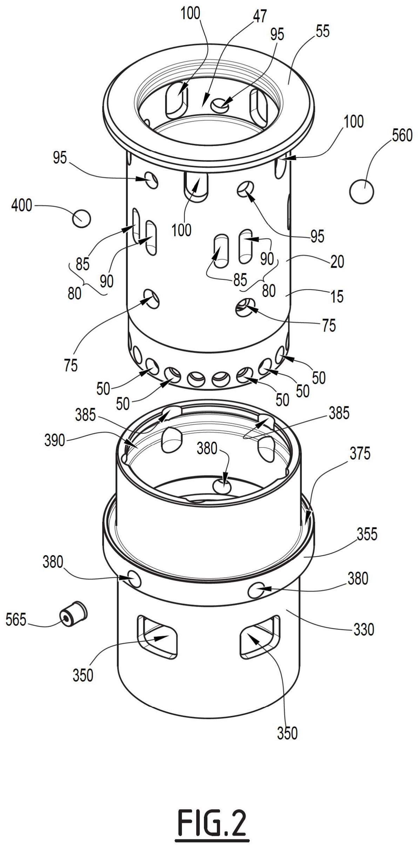

La bague de verrouillage 330 comprend quatre perçages 350. Chacun des perçages 350 traverse radialement de part en part la bague de verrouillage 330. Les perçages 350 sont centrés et également répartis autour de l'axe principal X1. Chacun des perçages 350 a une forme quadratique, bien visible sur la figure 2. Les perçages 350 sont ménagés sur la bague de verrouillage 330 à l'arrière, selon la direction arrière A2, de l'embouchure conique 345.

La bague de verrouillage 330 comprend une collerette 355. La collerette 355 s'étend radialement à l'axe principal X1 depuis la surface radiale externe 340 suivant une direction opposée à l'axe principal X1. La collerette 355 définit une surface axiale 360 tournée dans la direction avant A1, une surface axiale 365 opposée à la surface axiale 360 et une surface radiale externe 370 reliant la surface axiale 360 à la surface axiale 365. La collerette 355 est ménagée sur la bague de verrouillage 330 à l'arrière, selon la direction arrière A2, des perçages 350.

La collerette 355, présente une gorge axiale circulaire 375. La gorge axiale circulaire 375 est ménagée dans la surface axiale 365 et est centrée autour de l'axe principal X1.

La collerette 355 présente cinq logements de configuration 380, visibles sur la figure 2. Chacun des logements de configuration 380 traverse radialement de part en part la collerette 355. Les logements de configuration 380 sont centrés et également répartis autour de l'axe principal X1.

Avantageusement, la bague de verrouillage 330 comprend au moins une rainure oblongue 385. Dans cet exemple, cinq rainures oblongues 385 sont ménagées sur la surface radiale interne 335. Chacune des rainures oblongues 385 s'étend parallèlement à l'axe principal X1. Les rainures oblongues 385 sont centrées et également réparties autour de l'axe principal X1.

Avantageusement, la bague de verrouillage 330 comprend une gorge interne 390. La gorge interne 390 est annulaire et ménagée sur la surface radiale interne 335 de sorte à relier les rainures oblongues 385 entre elles.

La bague de verrouillage 330 est montée sur le porte-billes 15 de sorte que la surface radiale interne 335 est en contact avec la surface radiale extérieure 45.

Les perçages 350 sont respectivement dans le prolongement des perçages 75 et des perçages 150. Chacun des doigts de butée 155 traverse respectivement un des perçages 350. La forme quadratique des perçages 350 autorise à la fois un mouvement relatif de translation, parallèlement à l'axe principal X1, de la bague de verrouillage 330 par rapport au porte-billes 15 et aussi de rotation, autour de l'axe principal X1, de la bague de verrouillage 330 par rapport au porte-billes 15. Les mouvements de translation et de rotation sont limités à des plages définies par la forme quadratique et une taille des doigts de butée.

Plus précisément, la bague de verrouillage 330 est mobile en translation, parallèlement à l'axe principal X1, par rapport au porte-billes 15 entre une position de blocage et une position de déblocage.

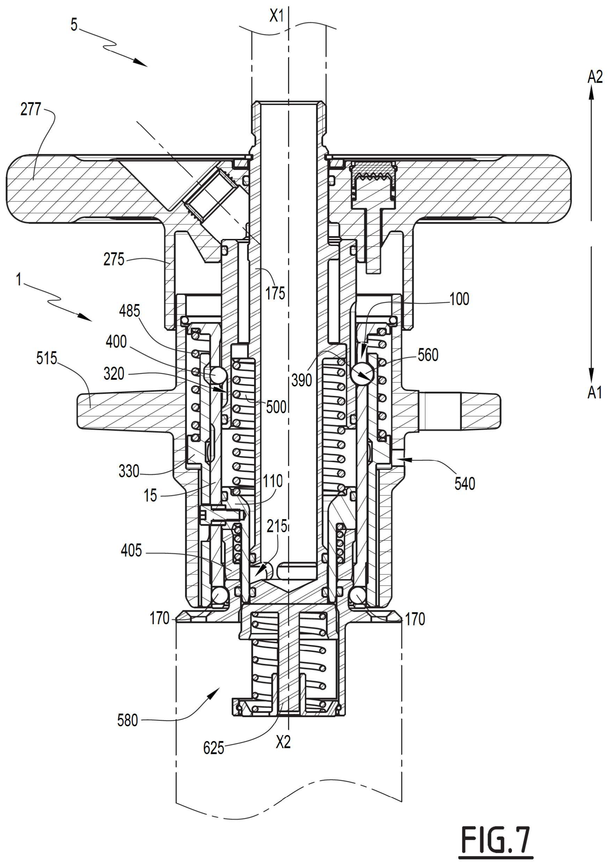

Lorsque la bague de verrouillage 330 est en position de blocage, la bague de verrouillage 330 est apte à maintenir les billes de verrouillage 170 dans la position de verrouillage. Plus précisément, comme représenté sur la figure 7, lorsque la bague de verrouillage 330 est en position de blocage, la bague de verrouillage 330 est avancée selon la direction avant A1 par rapport au porte-billes 15 et la surface radiale interne 335 est en contact avec les billes de verrouillages 170 et les repousse radialement vers l'axe principal X1 dans leur position de verrouillage.

Lorsque la bague de verrouillage 330 est en position de déblocage, les billes de verrouillage 170 sont libres d'atteindre la position escamotée. Plus précisément, comme représenté sur la figure 1, lorsque la bague de verrouillage 330 est en position de déblocage, la bague de verrouillage 330 est reculée selon la direction arrière A2 par rapport au porte-billes 15 et l'embouchure conique 345 est en regard des billes de verrouillages 170 ce qui autorise un déplacement des billes de verrouillages 170 vers leur position escamotée.

Le dispositif de remplissage 5 comprend au moins une bille d'attelage 400. Dans cet exemple, le dispositif de remplissage 5 comprend cinq billes d'attelage 400. Chacune des billes d'attelage 400 est respectivement reçue dans un second logement radial 95. Les billes d'attelage 400 sont solidaires axialement au porte-billes et sont, respectivement, mobile en translation radialement par rapport au porte-billes 15 entre une première position et une seconde position.

Lorsqu'une bille d'attelage 400 est dans la première position, la bille d'attelage 400 dépasse du second logement radial 95 associé dans une des rainures 320. La bille d'attelage 400 limite, ainsi, le déplacement parallèlement à l'axe principal X1, de la soupape 175 à une plage définie par une longueur longitudinale de la rainure 320 associée. Les billes d'attelage 400 sont maintenues dans la première position, lorsque la bague de verrouillage 330 est en position de déblocage, la surface radiale interne 335 étant en contact avec les billes d'attelage 400 et les repoussant radialement vers l'axe principal X1 dans leur première position.

Lorsqu'une bille d'attelage 400 est dans la seconde position, la bille d'attelage 400 autorise le déplacement de la soupape 175 vers sa position avant et maintient la bague de verrouillage 330 dans la position de blocage. Plus précisément, lorsque la bague de verrouillage 330 est en position de blocage, la gorge interne 390 est avancée, selon la direction avant A1, en regard de la bille d'attelage 400, de sorte que le déplacement de la soupape 175 vers sa position avant repousse radialement la bille d'attelage 400 vers sa seconde position dans la gorge interne 390. Lorsque la bille d'attelage 400 dépasse radialement dans la gorge annulaire interne 390, la bille d'attelage 400 ne dépasse plus dans la rainure 320 associée.

Lorsque la soupape 175 est dans la position avant, la surface radiale externe 260 bloque les billes d'attelage 400 dans leur seconde position et les billes d'attelage 400, à la fois logées dans le second logement radial 95 et reçues dans la gorge interne 390, empêche la translation de la bague de verrouillage 330 par rapport au porte-billes 15 et bloque la bague de verrouillage 330 dans sa position de blocage.

La poignée 275, la soupape 175 et le porte-billes 15 sont considérés comment solidaires en rotation autour de l'axe principal X1 du fait du montage et des éléments de frottement.

Le dispositif de remplissage 5 comprend un tiroir 405. Le tiroir 405 est une pièce de révolution centrée, sur l'axe principal X1. Le tiroir 405 est délimité par une surface radiale interne 410 et une surface radiale externe 415.

Le tiroir 405 comprend une collerette avant 420 qui s'étend radialement à l'axe principal X1 depuis la surface radiale interne 410 en direction de l'axe principal X1. La collerette avant 420 définit une surface axiale 425 tournée dans la direction avant A1, une surface axiale 430 opposée à la surface axiale 425 et une surface radiale interne 435 reliant la surface axiale 425 à la surface axiale 430.

Le tiroir 405 comprend une collerette arrière 440 qui s'étend radialement à l'axe principal X1 depuis la surface radiale externe 415 selon une direction opposée à l'axe principal X1. La collerette arrière 440 définit une surface axiale 445 tournée dans la direction avant A1, une surface axiale 450 opposée à la surface axiale 445 et une surface radiale externe 455 reliant la surface axiale 445 à la surface axiale 450.

Le tiroir 405 est monté glissant dans l'espace annulaire 153, la surface radiale interne 435 étant en contact avec la surface radiale externe115 et la surface radiale externe 415 étant en contact avec la surface radiale intérieure 40.

Le tiroir 405 est mobile en translation, parallèlement à l'axe principal X1, par rapport au porte-billes 15 entre une position engagée et une position dégagée.

Lorsque le tiroir 405 est en position engagée, le tiroir 405 est apte à maintenir les billes de verrouillage 170 en position escamotée. Plus précisément, lorsque le tiroir 405 est en position engagée, la surface axiale 445 est en butée avant contre un épaulement 460 en saillie de la surface intérieure 40 du porte-billes 15 et la surface radiale externe 415 est en regard des premiers logements radiaux 50 bloquant la translation radiale des billes de verrouillage 170 vers l'axe principal X1 et repoussant les billes de verrouillage 170 dans leur position de déverrouillage.

Lorsque le tiroir 405 est en position dégagée, les billes de verrouillage 170 sont libres d'atteindre leur position de verrouillage. Plus précisément, lorsque le tiroir 405 est en position dégagée, le tiroir 405 est repoussé vers l'arrière, selon la direction arrière A2, par rapport à la position engagée et prend, avantageusement, appui axialement sur le porte-billes 15. En effet, le tiroir 405 est repoussé jusqu'à ce que la collerette arrière 440 soit en butée arrière contre la collerette 130, de sorte que la surface radiale externe 415 est reculée par rapport aux premiers logements radiaux 50 et n'obstrue pas la translation des billes de verrouillage 170 de la position escamotée vers la position de verrouillage.

Le dispositif de remplissage 5 comprend un premier organe élastique 470 apte à déplacer le tiroir 405 vers sa position engagée. Dans cet exemple, le premier organe élastique 470 est un ressort. Une première extrémité 475 du premier organe élastique 470 est logée dans la gorge axiale circulaire 145 du siège de soupape 110 du porte-billes 15 et une deuxième extrémité 480 du premier organe élastique 470 est en contact avec la surface axiale 430 du tiroir 405. Le premier organe élastique 470 repousse le tiroir 405, dans la direction avant A1, dans sa position engagée en butée contre l'épaulement 460.

Le dispositif de remplissage 5 comprend un deuxième organe élastique 485 apte à déplacer la bague de verrouillage 330 de sa position de déblocage vers sa position de blocage. Dans cet exemple, le deuxième organe élastique 485 est un ressort.

Avantageusement, le deuxième organe élastique 485 prend appui sur le porte-billes 15. Plus précisément, une première extrémité 490 du deuxième organe élastique 485 est logée dans la gorge axiale circulaire 70 du porte-billes 15 et une deuxième extrémité 495 du deuxième organe élastique 485 est logée dans la gorge axiale circulaire 375 de la bague de verrouillage 330. Le deuxième organe élastique 485 repousse la bague de verrouillage 330, dans la direction avant A1, de sa position de déblocage vers sa position de blocage.

Avantageusement, le dispositif de remplissage 5 comprend un troisième organe élastique 500 apte à déplacer la soupape 175 vers sa position arrière. Dans cet exemple, le troisième organe élastique 500 est un ressort. Une première extrémité 505 du troisième organe élastique 500 est en contact avec la surface axiale 225 de la collerette 220 et une deuxième extrémité 510 du troisième organe élastique 500 est en contact avec la collerette 130 du siège de soupape 110. Le troisième organe élastique 500 repousse la soupape 175, dans la direction arrière A2, vers sa position arrière.

Avantageusement, le dispositif de remplissage 5 comprend une bague de manœuvre 515. La bague de manœuvre 515 est tubulaire et, centrée autour de l'axe principal X1. Le bague de manœuvre 515 est délimitée par une surface radiale interne 520 et une surface radiale externe 525. La surface radiale interne 520 délimite un volume de bague 530.

La bague de manœuvre 515 comprend un épaulement interne 535 en saillie dans le volume de bague 530.

La bague de manœuvre 515 comprend cinq orifices de configuration 540. Chacun des orifices de configuration 540 traverse radialement de part en part de la bague de manœuvre 515 et débouche dans le volume de bague 530. Les orifices de configuration 540 sont centrés et également répartis autour de l'axe principal X1.

La bague de manœuvre 515 comprend un collier 545. Le collier 545 s'étend depuis la surface radiale externe 525 dans une direction opposée à l'axe principal X1.

La bague de manœuvre 515 est montée autour de la bague de verrouillage 330. Plus précisément, la bague de verrouillage 330 est reçue dans le volume de bague 530, l'épaulement interne 535 offrant une butée avant à la collerette 355 de la bague de verrouillage 330.

La bague de manœuvre 515 est mobile en translation le long de l'axe principal X1 par rapport au porte-billes 15 entre une position avancée et une position reculée.

Lorsque la bague de manœuvre 515 est en position avancée et la bague de verrouillage 330 est en position de blocage, la bague de verrouillage 330 est entièrement contenue dans la bague de manœuvre 515 autour de l'axe principal X1. La bague de verrouillage 330 ne dépasse pas du volume de bague 530.

Le déplacement de la bague de manœuvre 515 par rapport au porte-billes 15 selon la direction avant A1 est limité par un jonc 550 logé dans une gorge radiale arrière 555 de la bague de manœuvre 515. La surface axiale 65 du porte-billes 15 forme une butée avant au jonc 550 et limite le déplacement de la bague de manœuvre 515 par rapport au porte-billes 15.

Lorsque la bague de manœuvre 515 est en position reculée, les orifices de configuration 540 sont respectivement en regard des logements de configuration 380 de la bague de verrouillage 330.

La bague de manœuvre 515, entre sa position avancée et sa position reculée, peut entrainer, par contact entre l'épaulement interne 535 et la collerette 355, la bague de verrouillage 330 de sa position de blocage vers sa position de déblocage.

Avantageusement, le dispositif de remplissage 5 comprend des moyens de sécurité 560. Dans cet exemple, le dispositif de remplissage 5 comprend cinq moyens de sécurité 560. Les moyens de sécurité 560 sont dans cet exemple des billes.

Les billes de sécurité 560 sont, respectivement, logées dans les logements oblongs 100 du porte-billes 15. Les billes de sécurité 560 sont libres de se déplacer parallèlement à l'axe principal X1 dans les logements oblongs 100. Les billes de sécurité 560 dépassent radialement de chaque côté des logements oblongs 100. En particulier, les billes de sécurité dépassent dans les rainures 325 de la soupape 175 et forment une butée axiale pour la soupape 175 par rapport au porte-billes 15 dans la position arrière de la soupape 175.

Les billes de sécurité 560 sont configurées pour prendre une première configuration et une deuxième configuration. Le dispositif de remplissage 5 est configuré pour prendre respectivement une première et une deuxième configuration. Le dispositif de remplissage 5 est dans sa première configuration lorsque les billes de sécurité 560 sont dans leur première configuration et le dispositif de remplissage 5 est dans sa deuxième configuration lorsque les billes de sécurité 560 sont dans leur deuxième configuration.

Lorsque les billes de sécurité 560 sont dans leur première configuration, les billes de sécurité 560 dépassent radialement dans la gorge interne 390 de la bague de verrouillage 330 de sorte que le mouvement de recul, selon la direction arrière A2, de la soupape 175 entre une position intermédiaire, située par rapport au porte-billes 15 entre la position avant et la position arrière, et la position arrière, déplace les billes de sécurité 560, en butée contre les rainures 325, dans les logements oblongs 100. Les billes de sécurité 560 entrainent, alors, la bague de verrouillage 330 de la position de blocage à la position de déblocage.

Lorsque que les billes de sécurité 560 sont dans leur deuxième configuration, les billes de sécurité 560 dépassent radialement dans les rainures oblongues 385 de la bague de verrouillage 330 de sorte que le déplacement de la bague de verrouillage 330 de la position de blocage à la position de déblocage est indépendant du mouvement de recul de la soupape 175 entre sa position avant et sa position arrière.

Le dispositif de remplissage 5 comprend des moyens de solidarisation en rotation de la bague de manœuvre 515 et de la bague de verrouillage 330. Dans cet exemple, les moyens de solidarisation comprennent au moins un logement de configuration 380 et un orifice de configuration 540 aptes à recevoir une tige non représentée, de diamètre sensiblement inférieur aux logements de configuration 380 et aux orifices de configuration 540. Lorsque que la bague de manœuvre 515 est en position reculée et que les orifices de configuration 540 sont en regard des logements configuration 380, la tige est apte à être insérée dans un des orifices de configuration 540 et l'un des logements configuration 380 solidarisant en rotation autour de l'axe principal X1, la bague de manœuvre 515 avec la bague de verrouillage 330 de sorte à faire évoluer les billes de sécurité 560 de leur première configuration à leur deuxième configuration par un mouvement de rotation commun de la bague de manœuvre 515 et de la bague de verrouillage 330 par rapport au porte-billes 15. Chaque logement de configuration 380 est donc associé avec un orifice de configuration 540 en regard du logement de configuration 380.

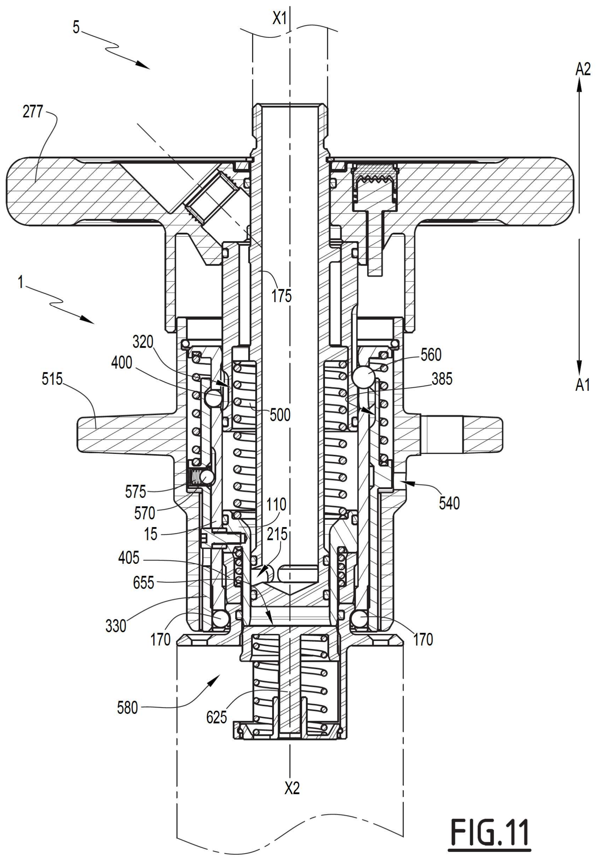

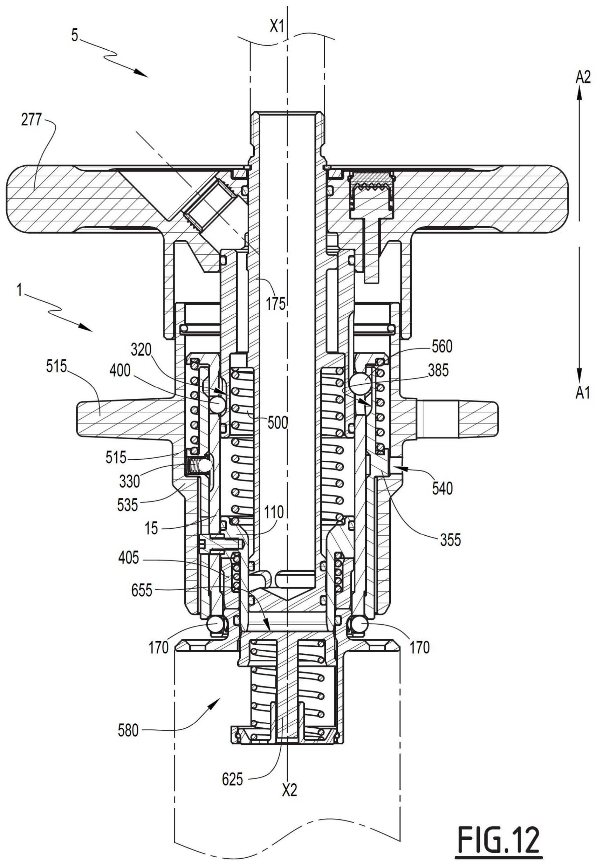

Le dispositif de remplissage 5 comprend également une à quatre billes d'indexage 570, visibles sur les figures 11 et 12. Chaque bille d'indexage est respectivement reçue dans un des cinq logements de configuration 380 associés. Au moins un logement de configuration 380 demeure libre, c'est-à-dire apte à recevoir une tige insérée dans l'orifice de configuration 540 associé. Chacune des billes d'indexage 570 est poussée radialement en direction de l'axe principal X1 par un deuxième ressort 575 associé contenu dans un poussoir 565 positionné dans le logement de configuration 380. Chacune des billes d'indexage 570 dépasse ainsi de la surface radiale interne 335 dans la rainure longitudinale 85 ou la rainure longitudinale 90 d'une paire de rainures longitudinales 80 associée.

Les billes de sécurité 560 prennent la première configuration lorsque les billes d'indexage 570 dépassent dans leur rainures longitudinales 85 respectives et les billes de sécurité 560 prennent la deuxième configuration lorsque les billes d'indexage 570 dépassent dans leur rainures longitudinales 90 respectives. La configuration des billes de sécurité 560 est donc modifiée par une rotation de la bague de verrouillage 330, autour de l'axe principal X1, par rapport au porte-billes 15.

L'ensemble de remplissage 1 comprend également un about 580. L'about 580 est configuré pour être embarqué sur le véhicule et est relié au réservoir 3 du véhicule. L'about 580 est l'élément de raccord fluidique complémentaire, dit mâle ou about, au dispositif de remplissage 5, l'about 580 étant emmanchable selon l'axe principal X1 avec le dispositif de remplissage 5 lors d'un accouplement de l'about 580 et du dispositif de remplissage 5.

L'about 580 comprend un corps d'about 585 configuré pour repousser le tiroir 405 du dispositif de remplissage 5 de sa position engagée vers sa position dégagée pendant l'accouplement de l'about 580 et du dispositif de remplissage 5. Le corps d'about 585 est tubulaire et centré autour d'un axe secondaire X2. Le corps d'about 585 est délimité par une surface radiale interne 590 et une surface radiale externe 595. La surface radiale interne 590 délimite un volume d'about 600 relié au réservoir 3.

Le corps d'about 585 comprend une gorge périphérique externe 605 ménagée radialement sur la surface radiale externe 595. La gorge périphérique externe 605 est apte à recevoir les billes de verrouillage 170, lorsque les billes de verrouillage 170 sont en position de verrouillage.

Le corps d'about 585 comprend, également, un protrusion discale 610. La protrusion discale 610 s'étend radialement depuis la surface radiale externe 595 dans une direction opposée à l'axe secondaire X2. La gorge périphérique externe 605 est positionnée, selon la direction arrière A2, à l'arrière de la protrusion discale 610, la protrusion discale 610 délimitant partiellement la gorge périphérique externe 605. La protrusion discale 610 offre des moyens d'appui et de fixation sur le réservoir 3, de sorte que la gorge périphérique externe 605 est positionnée, selon la direction arrière A2, à l'arrière et à l'extérieur du réservoir 3.

Le corps d'about 585 comprend un épaulement avant 615 en saillie de la surface radiale interne 590. L'épaulement avant 615 forme une embouchure d'about 620 restreinte par rapport au volume d'about 600. L'épaulement avant 615 forme, également, un siège d'étanchéité du corps d'about 585.

L'about 580 comprend un clapet 625 formé d'une tête tubulaire 630 et d'un tige 635. La tête tubulaire 630 est délimitée par une surface radiale interne 640, une surface radiale externe 645, une surface axiale 650 dirigée selon la direction avant A1 et s'étendant à partir de la surface radiale interne 640 et une surface axiale 655 opposée à la surface axiale 650 et s'étendant à partir de la surface radiale externe 645.

La tige 635 est centrée sur l'axe secondaire X2 et s'étend dans la direction avant A1 à partir de la surface axiale 650.

Le clapet 625 est reçu dans le volume d'about 600. Le clapet 625 est mobile axialement dans le corps d'about 585 entre une position avancée et une position de retrait.

Lorsque le clapet 625 est en position avancée, un épaulement arrière 660 ménagé sur la surface radiale externe 645 de la tête 630 est en butée contre l'épaulement avant 615 du corps d'about 585, le clapet 625 prend ainsi appui sur le siège d'étanchéité 615 du corps d'about 585.

Lorsque le clapet 625 est en position de retrait, le clapet 625 est éloigné, dans la direction avant A1, du siège d'étanchéité 615.

L'étanchéité entre le corps d'about 585 et le clapet 625 est assurée par un joint 663 positionné entre le siège d'étanchéité 615 et la tête 630.

L'about 580 comprend, également, un siège de guidage 665. Le siège de guidage définit un volume de guidage 670 tubulaire dans lequel la tige 635 est apte à coulisser suivant l'axe secondaire X2. Le siège de guidage 665 est monté dans le corps d'about 585 et bouche le volume d'about 600 à l'opposé de la tête tubulaire 630. Un déplacement du siège de guidage 665, selon la direction avant A1, par rapport au corps d'about 585 est limité par un jonc 675 logé dans une gorge périphérique interne 680 du corps d'about 585.

L'about 580 comprend un troisième ressort 685 prenant appui sur le siège de guidage 665 d'une part et sur la surface axiale 650 d'autre part. Le troisième ressort 685 repousse le clapet 625 dans sa position avancée.

L'about 580 comprend un couvercle 690 muni d'un joint torique 695. Le couvercle est amovible par rapport au corps d'about 585 et lorsqu'il est monté sur le corps d'about 585, le couvercle recouvre et protège la tête 630 du clapet 625.

Les étapes de remplissage du réservoir 3 à l'aide du dispositif de remplissage 5 sont décrites dans la suite de la description.

A l'occasion du stationnement d'un véhicule, par exemple une moto, équipé d'un about 580 à un stand de remplissage en carburant, non représenté et équipé du dispositif de remplissage 5, le dispositif de remplissage 5 est approché de l'about 580 du véhicule. L'about 580 est fermé par son couvercle 690 et le dispositif de remplissage 5 maintient la soupape 175 en position arrière sur le siège de soupape 110 du porte-billes 15 de telle sorte que le canal d'écoulement 195 est obturé. Les billes de sécurité 560 sont dans leur première configuration et les billes de sécurité 560 sont logées dans la gorge interne 390 de la bague de verrouillage 330.

Comme représenté sur la figure 1, l'ensemble de remplissage 1 est désaccouplé. L'opérateur retire le couvercle 690 de l'about 580 et aligne le dispositif de remplissage 5 avec l'about 580, l'axe principal X1 et l'axe secondaire X2 sont alors coaxiaux. L'opérateur manipule le dispositif de remplissage en empoignant le volant 277.

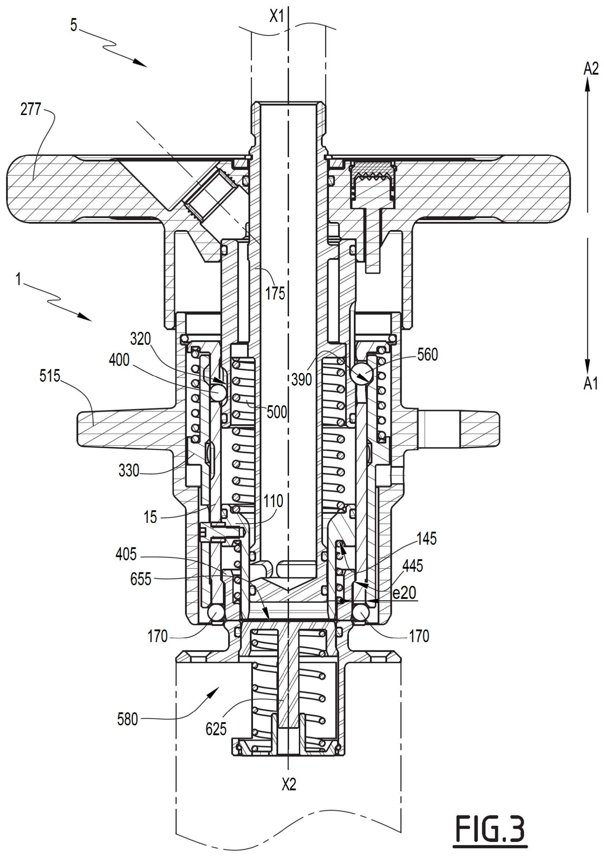

Comme représenté sur la figure 3, le dispositif de remplissage 5 est, ensuite, rapproché de la face axiale 655 du clapet 625, et le tiroir 405 est mis en contact avec le corps d'about 585. Les billes de verrouillage 170 sont maintenues en position escamotée par le tiroir 405 en position engagée. Les billes de verrouillage 170 empêchent l'avancement de la bague de verrouillage 330, les billes de verrouillage 170 maintenant ainsi la bague de verrouillage 330 dans la position de déblocage. Les billes de sécurité 560 sont dans leur première configuration et dépassent radialement dans la gorge interne 390 de la bague de verrouillage 330. Le troisième organe élastique 500 maintient la soupape 175 en position arrière. Les billes d'attelage 400 sont maintenues radialement dans les rainures 320 de la soupape 175 par la bague de verrouillage 330, et bloquent un mouvement de recul, suivant la direction arrière A2, de la soupape 175.

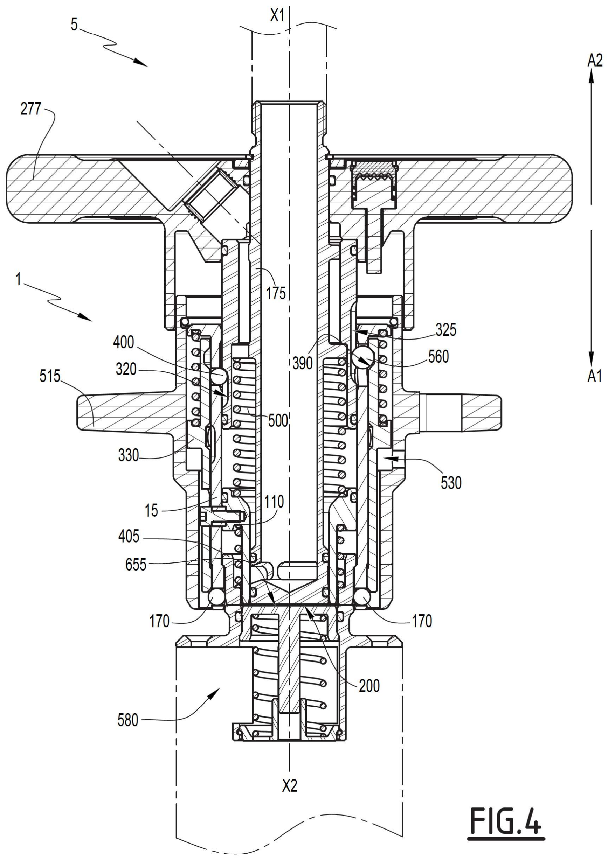

L'opérateur pousse le volant 277, selon la direction avant A1, vers l'about 580, comme représenté sur la figure 4. La face axiale avant 200 de la soupape 175 prend contact avec la surface axiale 655 du clapet 625. Du fait de l'effort de ressort 470 exercé sur le tiroir 405, le tiroir 405 reste en position engagée. La soupape 175 avance par rapport au porte-billes 15, selon la direction avant A1, dans la plage autorisée par les rainures 320, pour libérer les billes de sécurité 560 de la butée des rainures 325. Les billes de sécurité 560 ne sont plus contraintes par la soupape 175. Les billes d'attelage 400 trouvent une butée proximale dans les rainures 320 de la soupape 175. La soupape 175 reste maintenue dans cette position sans pouvoir progresser vers l'avant, selon la direction avant A1, par rapport au porte-billes 15. La longueur longitudinale de la rainure 320 correspond à une plage de surcourse de la soupape 175 par rapport à la bague de verrouillage 330, la soupape prenant contact avec la surface axiale 655 du clapet sans le repousser.

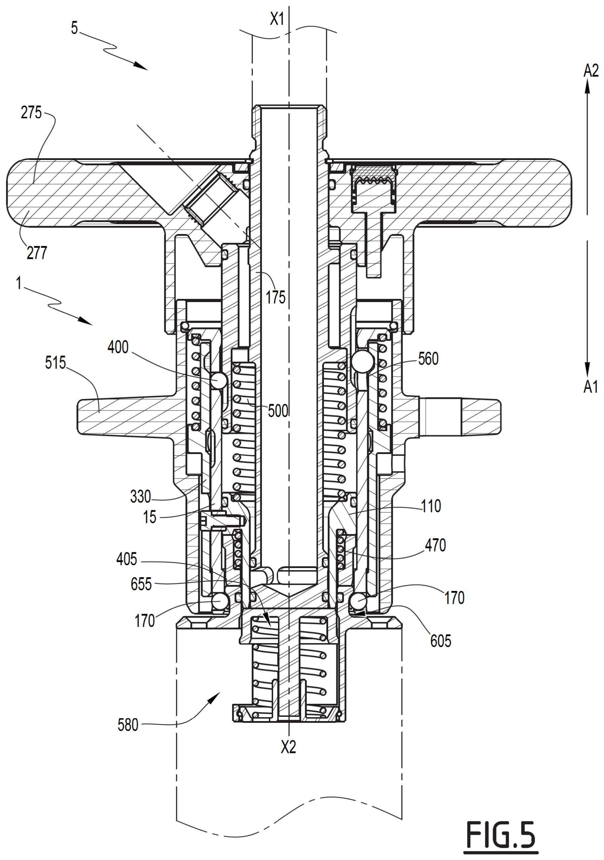

Comme représenté sur la figure 5, les billes de verrouillage 170 sont alignées avec la gorge périphérique externe 605 du corps d'about 585 lorsque le tiroir 405 est repoussé en arrière, selon la direction arrière A2, par le corps d'about 585 à l'encontre de l'effort exercé par le premier organe élastique 470. Les billes de verrouillage 170 viennent se loger dans la gorge périphérique externe 605. Le tiroir 405 prend appui et est en butée arrière contre le siège de soupape 110 ce qui marque la fin du rapprochement du dispositif de remplissage 5 par rapport à l'about 580. En variante, notamment si l'effort de ressort 470 est faible, le tiroir 405 atteint sa position dégagée avant que la soupape 175 avance par rapport au porte-billes 15.

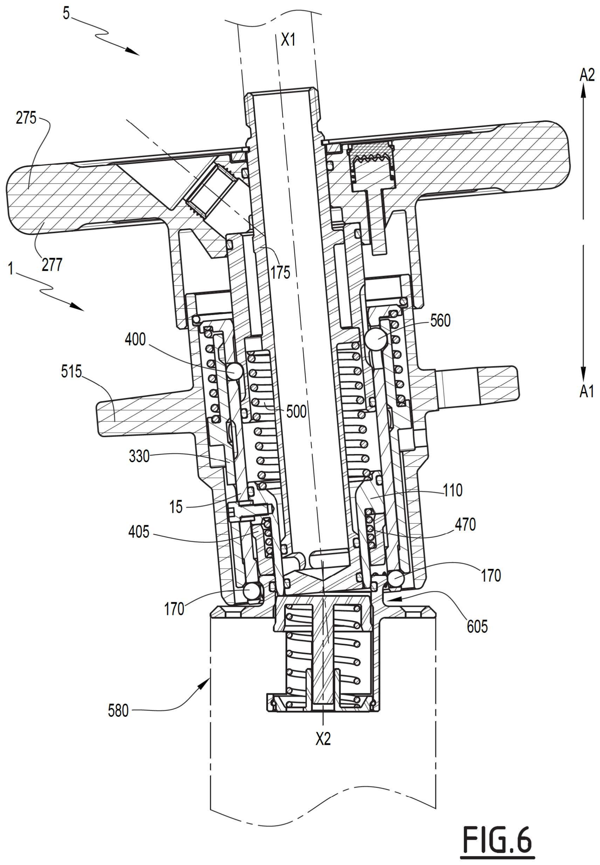

Si l'axe principal X1 et l'axe secondaire X2 ne sont pas coaxiaux, comme représenté sur la figure 6, le corps d'about 585 peut repousser le tiroir 405 et libérer certaines billes de verrouillage 170 afin que ces billes de verrouillage 170 trouvent une position dans la gorge périphérique externe 605 de l'about 580. Cependant, d'autres billes de verrouillage 170, visibles dans un plan perpendiculaire au plan illustré notamment, sont au contact d'un bord de corps d'about 585 et maintenues en position escamotées, de sorte qu'elles maintiennent la bague de verrouillage 330 en position de déblocage et que l'accouplement n'est pas rendu possible.

Avantageusement, la disposition des billes de verrouillage 170 et leur faible espacement limitent le risque de mauvaise connexion du dispositif de remplissage qui pourrait avoir des conséquences désastreuses en cas de déversement de carburant sans que l'ensemble de remplissage 1 soit réellement accouplé de manière étanche. Ainsi les billes de verrouillage 170 permettent de sécuriser la phase de verrouillage puisque toute bille de verrouillage 170 n'étant pas en prise sur la gorge périphérique externe 605 de l'about 580 empêche l'avancée de la bague de verrouillage 330 si le dispositif de remplissage 5 n'est pas aligné avec l'about 580.

Comme représenté à la figure 7, les billes de verrouillage 170 ne bloquant plus le déplacement la bague de verrouillage 330, la bague de verrouillage 330 est entrainée vers l'avant, dans sa position de blocage, par le deuxième organe élastique 485. L'entrainement de la bague de verrouillage 330 par le deuxième organe élastique 485 permet de verrouiller sans nécessité d'effort extérieur au deuxième organe élastique 485 et à maintenir le dispositif de remplissage 5 verrouillé sur l'about 580. Ce fonctionnement préliminaire marque l'étape de verrouillage avant l'ouverture de la soupape, ce qui est plus sûr par rapport à l'état de la technique.

La bague de verrouillage 330 atteint sa position de blocage, en butée sur les doigts du butée 155. L'avancée de la bague de verrouillage 330 entraine les billes de sécurité 560 vers l'avant et les billes de sécurité 560 se trouvent en butée distale dans leur logement oblong 100. La soupape 175 reste en contact radial étanche contre le siège de soupape 110. En effet, lorsque le tiroir 405 passe de la position engagée à la position dégagée, la soupape 175 est maintenue en position arrière par le troisième organe élastique 500. Ainsi le verrouillage est réalisé avant que le passage de distribution 215 soit ouvert puisqu'une opération de manoeuvre à l'encontre du troisième organe élastique 500 est rendue nécessaire et rendue possible que lorsque les billes d'attelage 400 ont été repoussées dans la gorge interne 390 de la bague de verrouillage 330. Également, la plage de déplacement de la soupape 175 autorisée par les rainures 320 permet de séquencer le verrouillage de la bague de verrouillage 330 et l'ouverture de la soupape 175. De plus, la bague de verrouillage 330 est contenue dans la bague de manœuvre 515 et n'est pas accessible ce qui sécurise le verrouillage.

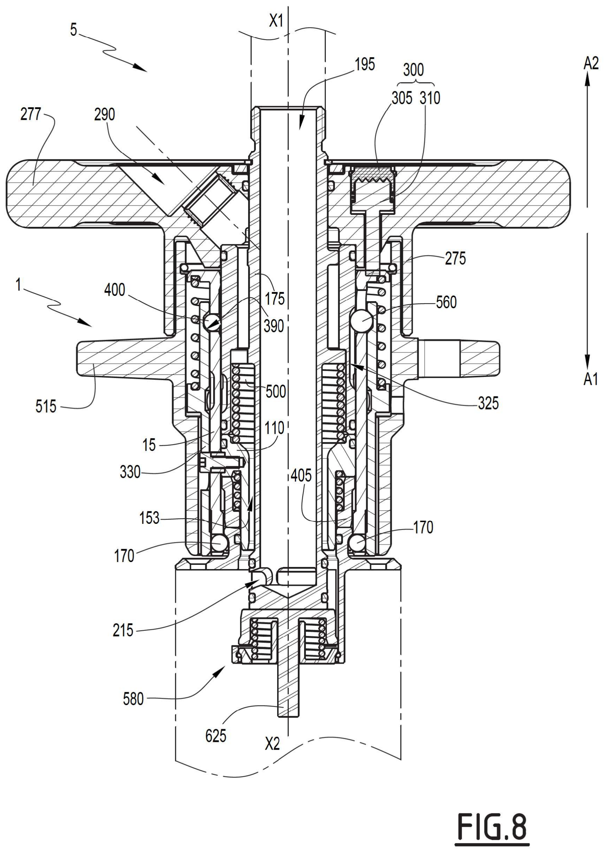

L'opérateur poursuit le mouvement de rapprochement du volant 277 et de l'about 580. La surface radiale externe 260 de la soupape 175 repousse les billes d'attelage 400 dans la gorge interne 390 de la bague de verrouillage 330, comme représenté sur la figure 8. La bague de verrouillage 330 est verrouillée en position de blocage. Le passage de distribution 215 dépasse axialement du siège de soupape 110 de sorte qu'une fois le clapet 625 repoussé, le canal d'écoulement 195 est connecté avec le réservoir 3 du véhicule. La soupape 175 est avancée au maximum, et le clapet 625 est repoussé au maximum de sorte qu'un espace de veine fluide est défini entre les deux éléments de raccord. L'espace annulaire 153 défini radialement entre le porte-billes 15 et la soupape 175 permet le passage d'évents qui gagnent les passages annulaires 265 dans le corps central 250 de la soupape 175 puis le canal d'évents 290 du volant 277. Les évents sont recyclés selon l'état de l'art du domaine technique. Le dispositif de remplissage 5 est dans une phase de remplissage c'est-à-dire de distribution de carburant.

A l'occasion du rapprochement maximum, le piston 310 du voyant 300 est repoussé vers la lentille 305. Dans la position avancée de la soupape 175, le piston 310 prend appui sur la couronne 55 du porte-billes 15 qui le repousse dans une configuration de coopération avec la lentille 305 du voyant 300. La lentille 305 affiche alors une couleur différente de la couleur affichée lorsque le piston 310 n'est pas en contact avec la lentille 305, c'est-à-dire lorsque la soupape 175 n'est pas en position avancée. Le voyant 300 indique donc un état de connexion du dispositif de remplissage 5, lorsque le rapprochement mutuel de la poignée 275 et de l'about 580 permet le remplissage en carburant du véhicule. Cet affichage est utile à l'opérateur qui peut réaliser si sa pression sur la poignée 275 est suffisamment appliquée pour créer un espace de veine fluide optimale.

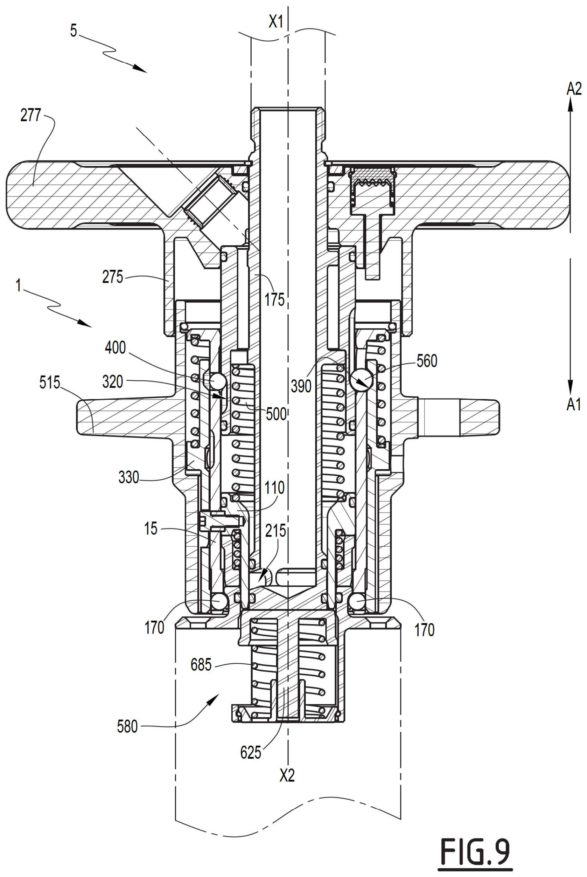

La figure 9 représente un scénario où l'opérateur relâche la poignée 275, dans une situation d'incident par exemple. Le troisième organe élastique 500 repousse la soupape 175 vers l'arrière, dans la direction arrière A2. La soupape 175 est alors en butée arrière contre les billes de sécurité 560 prises dans la gorge interne 390 de bague de verrouillage 330, étant donné que les billes de sécurité 560 sont dans la première configuration. La soupape 175 est dans sa position intermédiaire. L'action du troisième organe élastique 500 ramène le passage distribution 215 en regard du siège de soupape 110, fermant le circuit de distribution. Le troisième ressort 685 repousse également le clapet 625, dans la direction avant A1, obstruant l'accès au réservoir 3.

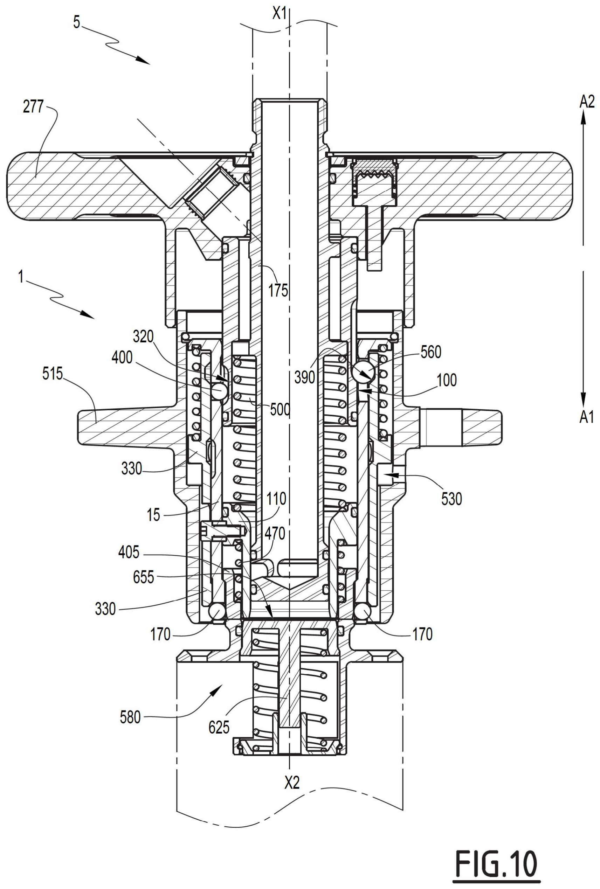

Le troisième organe élastique 500 repousse davantage la soupape 175 vers l'arrière et entraine la bague de verrouillage 330 de sa position de blocage vers sa position de déblocage au moyen des billes de sécurité 560 qui translatent dans le logement oblong 100 du porte-billes 15 comme représenté sur la figure 10. Ainsi, les billes de sécurité 560 solidarise en translation la bague de verrouillage 330 et la soupape 175 dans le mouvement de recul de la soupape 175 de sa position avant à sa position arrière. Ce mouvement est réalisé dans la plage de surcourse de la soupape 175, associée à la longueur axiale de rainure 320 La bague de verrouillage 330 par son recul, selon la direction arrière A2, repousse les billes d'attelage 400 dans les rainures 320 de la soupape 175 et contraint radialement les billes d'attelage 400 qui retiennent la soupape 175 en position arrière. Le recul de la bague de verrouillage 330 libère, également, les billes de verrouillage 170 radialement. Les billes de verrouillage 170 parviennent en position escamotée sous l'action du premier organe élastique 470 qui repousse le tiroir 405 vers l'avant, selon la direction avant A1. L'action du premier organe élastique 470 participe à l'écartement du dispositif de remplissage 5 et de l'about 580. La position atteinte est identique à la position représentée dans la figure 3.

Si l'opérateur n'a plus en main le dispositif de remplissage 5 pendant le remplissage du réservoir 3, le dispositif de remplissage 5 se déconnecte automatiquement et sans égoutture de l'about 580. Si le véhicule a démarré, le dispositif est déconnecté automatiquement.

Ainsi, dans la première configuration des billes de sécurité 560, au relâchement du dispositif de remplissage 5 par l'opérateur lors de l'étape de remplissage, les billes de sécurité 560 agissent sur la bague de verrouillage 330 pour déconnecter mécaniquement le dispositif de remplissage 5 de l'about 580, comme vu précédemment.

Dans la seconde configuration des billes de sécurité 560, le relâchement du dispositif de remplissage 5 n'occasionnera pas de déconnexion, les billes de sécurité 560 n'agissant pas sur la bague de verrouillage 330.

Les deux configurations des billes de sécurité 560 apparaissent sous le même mode de réalisation. Or l'invention prévoit un premier dispositif de remplissage alternatif, non représenté, qui structurellement ne comprend que les éléments fonctionnels de la première configuration selon un second mode dit « automatique ». L'invention prévoit un deuxième dispositif de remplissage alternatif, non représenté, qui structurellement ne comprend que les éléments fonctionnels de la première configuration selon le premier mode dit « manuel ». Ces modes de réalisation alternatifs s'affranchissent des moyens de configuration décrits.

Pour configurer les billes de sécurité 560 du dispositif de remplissage 5 désaccouplé de l'about 580, la bague de manœuvre 515 doit être reculée, selon la direction arrière A2, jusqu'à ce que les orifices de configuration 540 soient alignés avec les logements de configuration 380 de la bague de verrouillage 330. La tige est insérée dans un orifice de configuration 540 et le logement de configuration 380 associé pour lier en rotation la bague de verrouillage 330 et la bague de manœuvre 515. La configuration des billes de sécurité 560 est modifiée par une rotation de la bague de verrouillage 330 autour de l'axe principal X1 par rapport au porte-billes 15.

Lors du passage d'une configuration à l'autre, les billes d'indexage 'tombent' dans les rainures associées du porte-billes 15, ce qui offre un témoin de passage sonore pour l'opérateur, de l'une ou l'autre des configurations.

Dans la suite de la description, les billes de sécurité 560 sont dans leur deuxième configuration et dépassent dans les rainures oblongues 385 de la bague de verrouillage 330.

Les premières étapes de remplissage du réservoir 3 pour le dispositif de remplissage 5 sont identiques que les étapes présentées précédemment jusqu'à ce que l'ensemble de remplissage soit dans la configuration représentée sur la figure 17. Les étapes diffèrent lorsque l'utilisateur relâche la poignée 275.

Le troisième organe élastique 500 repousse la soupape 175 vers l'arrière, dans la direction arrière A2, et ramène le passage distribution 215 en regard du siège de soupape 110 ce qui ferme le circuit de distribution. La soupape 175 est alors en butée arrière contre les billes de sécurité 560 et entraine les billes de sécurité 560 en déplacement vers l'arrière, selon la direction arrière A2, dans les rainures oblongues 385, comme représenté sur la figure 11. Le déplacement vers l'arrière des billes de sécurité 560 n'a pas d'influence sur la position de la bague de verrouillage 330 puisque les billes de sécurité peuvent se déplacer parallèlement à l'axe principal X dans les rainures oblongues 385. La bague de verrouillage 330 est maintenue en position de blocage par le deuxième organe élastique 485. Si le dispositif de remplissage 5 est lâché par l'opérateur, le dispositif de remplissage 5 reste accouplé à l'about 580.

L'opérateur agit sur la bague de manœuvre 515 et exerce un effort de traction selon la direction arrière A2. L'épaulement interne 535 bute contre la collerette 355 et entraine la bague de verrouillage 330 dans sa position de déblocage ce qui libère les billes de verrouillage 170, comme représenté sur la figure 12. Cette étape est conditionnelle pour la poursuite de la déconnexion, l'avancement du tiroir 405, et le dégagement du dispositif de remplissage 5.

En variante non représentée, les billes de sécurité 560 sont remplacées par un autre moyen d'entrainement de la bague de verrouillage 330.

En variante non représentée, la bague de verrouillage 330 et la bague de manœuvre 515 sont solidaires en translation.

En variante non représentée, le dispositif de remplissage 5 comprend un organe élastique entre le volant 277 et la bague de manœuvre 515 qui repousse la bague de manœuvre 515 vers l'avant.

En variante non représentée, le porte-billes 15 ne comprend pas de couronne et le deuxième organe élastique 485 prend appui sur le volant 277 de la soupape 175. La bague de manœuvre 515 est arrêtée en translation, parallèlement à l'axe principal X, de façon alternative au jonc représenté dans sa gorge interne, par exemple à l'aide d'un doigt de butée butant dans une rainure longitudinale du volant 277.

En variante non représentée, les billes de verrouillage, sont remplacées par des segments ou un composant de géométrie alternative.

En variante non représentée, la gorge interne 390 est remplacée par un lamage débouchant à l'arrière de la bague de verrouillage 330, de sorte que les billes d'attelage 400 ne contraignent pas le mouvement axial de la bague de verrouillage 330, dans la seconde position des billes d'attelage 400.

En variante non représentée, la soupape 175 est entrainée par un mécanisme à leviers et à galets.

Toute caractéristique décrite ci-avant pour un mode de réalisation ou une variante est applicable aux autres modes de réalisation et variantes décrits ci-avant, pour autant que cela est techniquement possible.

## Revendications

1. Dispositif de remplissage (5) en carburant, configuré pour être accouplé avec un about (580) raccordé à un réservoir (3) de véhicule, le dispositif de remplissage (5) comprenant :
- un porte-billes (15), comprenant :
∘ un corps de porte-billes (20), tubulaire, s'étendant le long d'un axe principal (X1) entre une partie arrière (25) et une partie avant (30) du corps de porte-billes (20), la partie avant (30) définissant une embouchure de réception (35) de l'about (580),
∘ un siège de soupape (110), tubulaire, s'étendant dans l'embouchure de réception (35) du corps de porte-billes (20) le long de l'axe principal (X1),
- au moins une bille de verrouillage (170), reçue dans un premier logement radial (50) ménagé dans la partie avant (30) du corps de porte-billes (20), et mobile dans le premier logement radial (50) entre une position escamotée et une position de verrouillage dans laquelle :
∘ ladite au moins une bille de verrouillage (170) est radialement moins excentrée par rapport à l'axe principal (X1) que dans la position escamotée, et
∘ ladite au moins une bille de verrouillage (170) dépasse dans l'embouchure de réception (35),
- une soupape (175), comprenant :
∘ un corps de soupape (180), qui est tubulaire et qui s'étend le long de l'axe principal (X1) entre une extrémité avant (207) du corps de soupape (180), et une extrémité arrière (205) du corps de soupape (180), le corps de soupape (180) définissant une surface radiale externe de soupape (260) et formant un canal d'écoulement (195) apte à être relié fluidiquement à une canalisation de remplissage (10) arrière de la soupape (175),
∘ un passage de distribution (215), relié au canal d'écoulement (195) et ménagé radialement à l'axe principal (X1) à l'avant du corps de soupape (180), et
la soupape (175) étant montée dans le porte-billes (15) de sorte que :
∘ la surface radiale externe de soupape (260) est en contact avec une surface intérieure (40) du corps de porte-billes (20),
∘ la soupape (175) est mobile en translation le long de l'axe principal (X1) par rapport au porte-billes (15) entre une position arrière, dans laquelle le siège de soupape (110) obture le passage de distribution (215), et une position avant, dans laquelle le passage de distribution (215) de la soupape (175) est dégagé,
- une bague de verrouillage (330), tubulaire, entourant le porte-billes (15) et étant mobile entre :
∘ une position de blocage, dans laquelle la bague de verrouillage (330) est apte à maintenir ladite au moins une bille de verrouillage (170) dans la position de verrouillage, et
∘ une position de déblocage dans laquelle ladite au moins une bille de verrouillage (170) est libre d'atteindre la position escamotée,
- au moins une bille d'attelage (400), solidaire axialement du porte-billes (15) et mobile radialement à l'axe principal (X1) entre :
∘ une première position, dans laquelle ladite au moins une bille d'attelage (400) empêche la soupape (175) d'atteindre sa position avant, ladite au moins une bille d'attelage (400) étant maintenue dans la première position lorsque la bague de verrouillage (330) est dans la position de déblocage, et
∘ une seconde position, dans laquelle ladite au moins une bille d'attelage (400) autorise le déplacement de la soupape (175) vers sa position avant,
- un tiroir (405), mobile dans un espace annulaire (153) défini entre une surface extérieure (120) du siège de soupape (110) et la surface intérieure (40) de la partie avant (30) du corps de porte-billes (20), le tiroir (405) étant configuré pour être repoussé par l'about (580) le long de l'axe principal (X1) entre :
∘ une position engagée dans laquelle le tiroir (405) est apte à maintenir ladite au moins une bille de verrouillage (170) en position escamotée, et
∘ une position dégagée dans laquelle ladite au moins une bille de verrouillage (170) est libre d'atteindre sa position de verrouillage,
- un premier organe élastique (470) apte à déplacer le tiroir (405) de sa position dégagée vers sa position engagée, et
- un deuxième organe élastique (485) apte à déplacer la bague de verrouillage (330) de sa position de déblocage vers sa position de blocage.

2. Dispositif (5) selon la revendication précédente, dans lequel le deuxième organe élastique (485) prend appui sur le porte-billes (15).

3. Dispositif (5) selon l'une des revendications précédentes, dans lequel dans la position engagée du tiroir (405) ladite au moins une bille de verrouillage (170) en position escamotée est apte à maintenir la bague de verrouillage (330) dans la position de déblocage.

4. Dispositif (5) selon l'une des revendications précédentes, dans lequel la surface radiale externe de soupape (260) est configurée pour maintenir ladite au moins une bille d'attelage (400) dans sa seconde position lorsque la soupape (175) est en position avant.

5. Dispositif (5) selon l'une des revendications précédentes, comprenant un troisième organe élastique (500) apte à déplacer la soupape (175) vers sa position arrière, et à maintenir la soupape (175) en position arrière lorsque le tiroir (405) passe de la position engagée à la position dégagée.

6. Dispositif (5) selon l'une des revendications précédentes, comprenant une bague de manoeuvre (515), montée autour de la bague de verrouillage (330) et mobile en translation le long de l'axe principal (X1), entre une position avancée et une position reculée entre lesquelles la bague de manoeuvre (515) peut entrainer la bague de verrouillage (330) de sa position de blocage vers sa position de déblocage.

7. Dispositif (5) selon l'une des revendications précédentes, dans lequel la surface radiale externe de soupape (260) comprend au moins une rainure (320) qui s'étend parallèlement à l'axe principal (X1), ladite au moins une rainure (320) étant apte à recevoir ladite au moins une bille d'attelage (400) et autorisant, lorsque ladite au moins une bille d'attelage (400) est dans sa première position, une translation de la soupape (175) par rapport au porte-billes (15) le long de l'axe principal (X1) sur une plage définie par une longueur longitudinale de ladite au moins une rainure (320).

8. Dispositif (5) selon l'une des revendications précédentes, dans lequel :
- le porte-billes (15) comprend au moins un second logement radial (95) aménagé à l'arrière du premier logement radial (50), ladite au moins une bille d'attelage (400) étant apte à translater entre sa première et sa seconde position au travers dudit au moins un second logement radial (95),
- la bague de verrouillage (330) comprend une gorge interne (390) configurée pour recevoir ladite au moins une bille d'attelage (400) dans sa seconde position de sorte que la dite au moins une bille d'attelage (400) maintient la bague de verrouillage dans la position de blocage.

9. Dispositif (5) selon l'une des revendications précédentes, comprenant des moyens de sécurité (560) configurés pour prendre une première configuration et une deuxième configuration de sorte que, lorsque que les moyens de sécurité (560) sont dans leur première configuration, les moyens de sécurité (560) sont aptes à entrainer la bague de verrouillage (330) de la position de blocage à la position de déblocage dans un mouvement de recul de la soupape (175) entre une position intermédiaire, située par rapport au porte-billes (15) entre la position avant et la position arrière, et la position arrière.

10. Dispositif (5) selon la revendication 9, dans lequel, lorsque que les moyens de sécurité (560) sont dans leur deuxième configuration, le déplacement de la bague de verrouillage (330) de la position de blocage à la position de déblocage est indépendant du mouvement de recul de la soupape (175) entre sa position avant et sa position arrière.

11. Dispositif (5) selon l'une des revendications 9 ou 10, dans lequel les moyens de sécurité (560) comprennent une bille de sécurité (560) mobile dans un logement oblong (100) du porte-billes (15), dépassant radialement de chaque côté du logement oblong (100), et formant une butée axiale pour la soupape (175) par rapport au porte-billes (15) dans la position arrière de la soupape (175).

12. Dispositif (5) selon la revendication 11, dans lequel la bague de verrouillage (330) comprend une gorge interne (390) configurée pour recevoir la bille de sécurité (560), de sorte que la bague de verrouillage (330) est entrainée de la position de blocage à la position de déblocage par la bille de sécurité (560) en appui sur la soupape (175) lors du mouvement de recul de la soupape (175), entre sa position avant et sa position arrière.

13. Dispositif (5) selon l'une des revendications 9 à 12, comprenant des moyens de solidarisation, en rotation autour de l'axe principal (X1), de la bague de manœuvre (515) avec la bague de verrouillage (330), les moyens de sécurité (560) évoluant de leur première à leur deuxième configuration par un mouvement de rotation de la bague de manœuvre (515) par rapport au porte-billes (15).

14. Dispositif (5) selon l'une des revendications précédentes, dans lequel le tiroir (405) prend appui axialement sur le porte-billes (15) dans sa position dégagée.

15. Dispositif (5) selon l'une des revendications précédentes dans lequel, lorsque la soupape (175) est en position avant, le siège de soupape (110) et la soupape (175) forment un espace annulaire fluidiquement relié à un canal d'évents (290) ménagé à l'arrière du dispositif (5).

16. Ensemble de remplissage (1) de réservoir (3) de véhicule en carburant, l'ensemble (1) comprenant un about (580), configuré pour être embarqué sur le véhicule et relié à un réservoir (3) du véhicule, et un dispositif de remplissage (5) selon l'une des revendications précédentes apte à être accouplé à l'about (580), l'about (580) comprenant :
- un corps d'about (585) configuré pour repousser le tiroir (405) du dispositif de remplissage (5) de sa position engagée vers sa position dégagée pendant un accouplement de l'about (580) et du dispositif de remplissage (5), le corps d'about (585) comprenant une gorge périphérique externe (605) apte à recevoir ladite au moins une bille de verrouillage (170), lorsque ladite au moins une bille de verrouillage (170) est en position de verrouillage, et
- un clapet (625) mobile axialement dans le corps d'about (585) entre une position avancée, dans laquelle le clapet (625) prend appui sur un siège d'étanchéité (615) du corps d'about (585), et une position de retrait, dans laquelle le clapet (625) est éloigné du siège d'étanchéité (615).
